# FASCICULE DE BREVET EUROPEEN

(11) **EP 3 925 421 B1**
(45) Date de publication et mention de la délivrance du brevet: **03.04.2024**
(21) Numéro de dépôt: 21179389.8
(22) Date de dépôt: 15.06.2021
(51) Int. Cl.: A01B 19/10, A01B 63/11, A01B 73/04

(54) **MACHINE DE TRAVAIL DU SOL**
BODENBEARBEITUNGSMASCHINE
MACHINE FOR WORKING SOIL

(30) Priorité: 16.06.2020 FR 2006235
(43) Date de publication de la demande: 22.12.2021
(73) Titulaire: Hydrokit, 85170 Le Poire sur Vie (FR)
(72) Inventeur: MORIN, Jean-Jacques, 85190 AIZENAY (FR); GABORIAU, Florian, 85600 SAINT GEORGES DE MONTAIGU (FR); CORNU, Didier, 85120 LA CHATAIGNERAIE (FR)
(74) Mandataire: Ipsilon

(56) Documents cités:
- WO-A1-2020/232341
- FR-A1- 2 904 181
- RU-C2- 2 653 552

## Description

La présente invention concerne une machine de travail du sol.

Elle concerne en particulier une machine de travail du sol comprenant un châssis et au moins une structure porte-outils couplable au châssis, ladite structure porte-outils comprenant un parallélogramme déformable auquel peut être couplé au moins un outil, ce parallélogramme déformable comprenant une biellette supérieure, une biellette inférieure et deux montants, dits avant et arrière, reliés aux biellettes par une liaison pivot d'axe, dit horizontal, en configuration d'utilisation de la structure porte-outils pour une déformation du parallélogramme dans le sens d'un abaissement ou d'un soulèvement du au moins un outil, ce parallélogramme étant couplé à pivotement au châssis, un actionneur étant disposé entre le parallélogramme et le châssis.

De telles machines de travail du sol par labour, binage, déchaumage, compression ou autre du sol selon le type d'outils utilisés sont bien connues à ceux versés dans cet art. Ces machines souvent de grande largeur offrent la possibilité aux outils de suivre le profil du sol au cours de l'avance de la machine pour former une bande de travail du sol. Elles offrent également la possibilité de relever les outils en extrémité de bande travaillée pour faciliter la manoeuvre de demi-tour en bout de champs. Les solutions proposées aujourd'hui pour remplir ce double objectif sont de construction complexe.

Un exemple de telles machines de travail est décrit dans les documents US 8336468 ou RU 2653552. Le document FR2904184 décrit une machine de travail du sol du type précité dans laquelle l'axe pivot de la liaison à pivotement du parallélogramme au châssis est disposé au niveau de la biellette inférieure.

Un but de l'invention est de proposer une machine de travail du sol du type précité dont la conception est simplifiée.

A cet effet, l'invention a pour objet une machine de travail du sol selon la revendication 1. Grâce à cette conception, le nombre de liaisons articulées est réduit sans nuire aux possibilités de suivi du profil du sol et de relevage du ou des outils.

Selon un mode réalisation, l'actionneur d'entraînement en déplacement à pivotement de la totalité du parallélogramme est disposé entre le châssis et le montant avant du parallélogramme, ce montant avant correspondant au montant du parallélogramme le plus proche du châssis par rapport au montant arrière.

Il en résulte de ce montage une simplicité de déplacement à pivotement de l'ensemble du parallélogramme autour de son unique liaison à pivotement au châssis.

Selon un mode de réalisation de l'invention, l'élément de bridage est configuré pour limiter la déformation du parallélogramme entre deux positions extrêmes de déformation.

Selon un mode de réalisation de l'invention, l'élément de bridage est constitué par une bielle s'étendant entre un montant et une biellette du parallélogramme et couplée à pivotement au montant et à la biellette entre lesquels elle s'étend, cette bielle étant munie au niveau de l'une de ses zones de couplage d'une lumière oblongue avec les extrémités de la lumière matérialisant les positions extrêmes de déformation du parallélogramme. A nouveau, il en résulte une simplicité de la construction.

Selon un mode de réalisation de l'invention, le montant auquel l'élément de bridage est couplé à pivotement est le montant arrière du parallélogramme, ce montant arrière correspondant au montant du parallélogramme le plus éloigné du châssis par rapport au montant avant.

Selon un mode de réalisation de l'invention, l'actionneur d'entraînement en déplacement à pivotement du parallélogramme autour de l'axe pivot de sa liaison à pivotement au châssis est un vérin.

### Brève description des dessins

L'invention sera bien comprise à la lecture de la description suivante d'exemples de réalisation, en référence aux dessins annexés dans lesquels :
[Fig. 1] représente une vue schématique partielle de côté d'une machine de travail du sol conforme à l'invention à l'état rentré ou rétracté du vérin ;
[Fig. 2] représente une vue schématique partielle de côté d'une machine de travail du sol conforme à l'invention à l'état sorti du vérin.

Comme mentionné ci-dessus, l'invention a pour objet une machine 1 de travail du sol destinée notamment à circuler dans les champs pour travailler le sol sous forme de bandes. Cette machine 1 de travail du sol comprend un châssis 2. Ce châssis 2 se présente généralement sous forme d'un ensemble mécanosoudé comprenant des poutres et des longerons, les poutres s'étendant transversalement à la direction d'avancement du châssis 2. Ce châssis 2 peut être équipé d'un attelage à un véhicule tracteur. La machine 1 de travail du sol comprend encore au moins une structure 3 porte-outils couplable au châssis 2. Cette structure 3 porte-outils comprend au moins un parallélogramme 4 déformable auquel peut être couplé au moins un outil 12. Dans l'exemple représenté, la structure 3 porte-outils illustrée est couplée à l'une des poutres transversales du châssis 2. Bien évidemment, une même poutre transversale du châssis 2 peut être équipée de plusieurs structures 3 porte-outils du type précité, ces structures 3 porte-outils étant disposées côte à côte le long de la poutre transversale pour couvrir une largeur de travail correspondant à la bande de terre devant être travaillée lors d'un passage de la machine 1 de travail du sol.

Le parallélogramme 4 déformable s'étend dans un plan sensiblement vertical pour pouvoir se déformer dans le sens d'un soulèvement ou d'un abaissement du ou des outils 12 couplés audit parallélogramme 4. Ce parallélogramme 4 déformable comprend une biellette 5 supérieure, une biellette 6 inférieure disposée à un niveau inférieur à la biellette 5 supérieure lorsque le parallélogramme 4 s'étend dans un plan vertical et deux montants 7. Ces deux montants 7 forment l'un, le montant 7 dit avant, l'autre, le montant 7 dit arrière du parallélogramme pris par rapport au sens d'avancement de la machine. Généralement, le montant 7 avant est plus proche du châssis 2 par rapport au montant 7 arrière. Les biellettes 5 supérieure et 6 inférieure s'étendent de manière sensiblement parallèle entre elles à plus ou moins 10° près. Chaque biellette est reliée à l'une de ses extrémités à l'un des montants 7 du parallélogramme 4 et à l'autre de ses extrémités à l'autre des montants 7 du parallélogramme 4. La liaison entre un montant 7 et une biellette est à chaque fois une liaison 8 pivot d'axe XX' dit horizontal en configuration d'utilisation de la structure 3 porte-outils, c'est-à-dire à l'état positionné dans un plan vertical du parallélogramme, pour une déformation du parallélogramme 4 dans le sens d'un abaissement ou d'un soulèvement du au moins un outil 12. L'axe XX' de la liaison 8 pivot s'étend sensiblement parallèlement à l'axe longitudinal de la poutre transversale du châssis 2 à laquelle la structure 3 porte-outils est couplée.

Les montants 7, la biellette 5 supérieure et la biellette 6 inférieure forment donc les quatre côtés de ce parallélogramme 4 déformable. Les montants 7 s'étendent également de manière sensiblement parallèle entre eux.

Le ou les outils 12 de cette structure 3 porte-outils peuvent affecter un grand nombre de formes. Dans les exemples représentés, les outils 12 comprennent un outil aratoire, tel qu'une lame, associé à une roue de terrage ou de jauge pour maîtriser la profondeur de travail du sol. Ces outils 12 peuvent être couplés directement ou via une interface de liaison à l'un des montants 7, en l'occurrence ici au montant 7 le plus éloigné du châssis 2. La présence du parallélogramme 4 déformable permet aux outils 12 de suivre le profil du sol, c'est-à-dire de se soulever lors de la rencontre d'un obstacle en relief ou de s'abaisser lors du franchissement d'un creux dans le sol par simple déformation dudit parallélogramme par sollicitation des liaisons 8 pivot entre montant et biellette dudit parallélogramme. Le parallélogramme 4 est couplé au châssis 2 par une seule liaison 9, dite à pivotement, présentant un axe YY' pivot confondu avec l'axe XX' pivot de la liaison 8 pivot entre la biellette 5 supérieure et l'un des montants 7 du parallélogramme 4, en l'occurrence ici le montant avant le plus proche du châssis 2. Cette liaison 9 à pivotement unique autorise le déplacement à pivotement de la totalité du parallélogramme autour de l'axe pivot de ladite liaison 9.

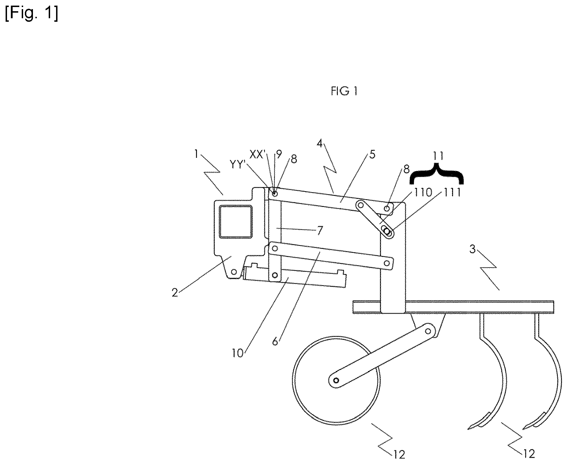

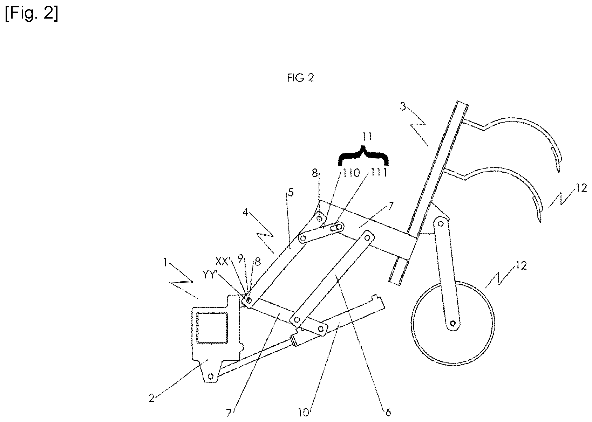

La machine 1 de travail du sol comprend encore un actionneur 10 réalisé ici sous forme d'un vérin d'entraînement en déplacement à pivotement de la totalité du parallélogramme 4 autour de l'axe YY' pivot de sa liaison 9 à pivotement au châssis 2. Cet actionneur 10 est disposé entre le parallélogramme 4 et le châssis 2. En particulier, l'actionneur 10 s'étend entre le montant 7 avant le plus proche du châssis 2 et le châssis 2. Cet actionneur 10, lorsqu'il est un vérin, comprend une tige et un corps. Ce vérin est relié par sa tige au châssis tandis que le corps est relié au montant 7 du parallélogramme le plus proche du châssis 2. En position rétractée du vérin, comme illustré à la figure 1, les outils 12 sont en position basse et le montant auquel le vérin est couplé est en position sensiblement verticale. Cette position correspond à celle dans laquelle les outils 12 sont en appui au sol et suivent le profil du sol par déformation d'au moins une partie du parallélogramme, à savoir en particulier la partie du parallélogramme comprenant le montant le plus éloigné du châssis 2 et les parties de biellettes associées. En position d'extension du vérin, comme illustré à la figure 2, le montant 7 le plus proche du châssis est écarté du châssis 2 dans le sens d'un relevage de la totalité du parallélogramme par pivotement autour de l'axe YY' de la liaison 9 à pivotement du parallélogramme 4 au châssis 2, ce déplacement étant, par l'intermédiaire du parallélogramme 4 déformable, transmis aux outils 12 pour générer un relevage des outils 12.

Pour permettre un déplacement à pivotement de la totalité du parallélogramme et une telle transmission du mouvement de déplacement de l'actionneur aux outils 12, le parallélogramme 4 déformable est bridé en déformation. A cet effet, le parallélogramme 4 déformable est muni d'au moins un élément 11 de bridage de la déformation d'au moins une partie du parallélogramme 4 entre deux positions extrêmes de déformation. La partie du parallélogramme limitée en déformation est ici formée par la biellette 5 supérieure et l'un des montants 7, à savoir le montant dit arrière le plus éloigné du châssis 2 du parallélogramme 4 pris par rapport au sens d'avancement du châssis 2. L'élément 11 de bridage est constitué par une bielle qui s'étend entre le montant 7 arrière et la biellette 5 supérieure et est couplé à pivotement au montant 7 arrière et à la biellette 5 supérieure par une liaison pivot d'axe parallèle à l'axe YY' pivot de la liaison 9 à pivotement du parallélogramme 4 déformable au châssis 2. Cette bielle 110 est munie, au niveau de l'une de ses zones de couplage à pivotement, en l'occurrence ici au niveau de sa zone de couplage à pivotement au montant 7 arrière, d'une lumière 111 oblongue. A l'intérieur de cette lumière 111 oblongue, l'axe pivot de la liaison pivot bielle/montant, matérialisé ici par un doigt équipant l'un des montants 7, en l'occurrence ici le montant 7 arrière, est déplaçable pour permettre un jeu au niveau de ladite liaison. L'amplitude du jeu est déterminée par la longueur de la lumière 111 oblongue dont les extrémités matérialisent les positions extrêmes de déformation limitée du parallélogramme.

En pratique, le fonctionnement d'une telle machine de travail est tel que suit. Lorsque l'actionneur est en position rétractée, le parallélogramme 4 se déforme par pivotement autour des axes XX' pivot d'au moins certaines des liaisons 8 pivot entre montants et biellettes. Quand l'actionneur passe de la position rétractée à la position d'extension, le parallélogramme se déforme jusqu'à venue en butée du doigt matérialisant l'axe pivot de la liaison à pivotement de l'élément de bridage au montant dans la lumière 111 dudit élément de bridage pour provoquer, lors de la poursuite de l'extension du vérin, un déplacement à pivotement de la totalité du parallélogramme et un relevage des outils 12.

## Revendications

1. Machine (1) de travail du sol comprenant un châssis (2) et au moins une structure (3) porte-outils couplable au châssis (2), ladite structure (3) porte-outils comprenant un parallélogramme (4) déformable auquel peut être couplé au moins un outil (12), ce parallélogramme (4) déformable comprenant une biellette (5) supérieure, une biellette (6) inférieure et deux montants (7), dits avant et arrière, reliés aux biellettes (5, 6) par une liaison (8) pivot d'axe (XX') dit horizontal en configuration d'utilisation de la structure (3) porte-outils pour une déformation du parallélogramme (4) dans le sens d'un abaissement ou d'un soulèvement du au moins un outil (12), ce parallélogramme (4) étant couplé à pivotement au châssis (2) par une seule liaison (9), dite à pivotement, présentant un axe (YY') pivot, un actionneur (10) étant disposé entre le parallélogramme (4) et le châssis (2), cet actionneur (10) étant un actionneur d'entraînement en déplacement à pivotement de la totalité du parallélogramme (4) autour de l'axe (YY') pivot de sa liaison (9) à pivotement au châssis (2) et le parallélogramme (4) étant muni d'au moins un élément (11) de bridage de la déformation du parallélogramme, **caractérisé en ce que** l'axe (YY') pivot de la liaison (9) à pivotement du parallélogramme (4) au châssis (2) est confondu avec l'axe (XX') de la liaison (8) pivot entre la biellette (5) supérieure et l'un des montants (7) du parallélogramme (4).

2. Machine (1) de travail du sol selon la revendication 1, **caractérisée en ce que** l'actionneur (10) d'entraînement en déplacement à pivotement de la totalité du parallélogramme (4) est disposé entre le châssis (2) et le montant (7) avant du parallélogramme, ce montant (7) avant correspondant au montant du parallélogramme (4) le plus proche du châssis (2) par rapport au montant (7) arrière.

3. Machine (1) de travail du sol selon l'une des revendications 1 ou 2, **caractérisée en ce que** l'élément (11) de bridage est configuré pour limiter la déformation du parallélogramme (4) entre deux positions extrêmes de déformation.

4. Machine (1) de travail du sol selon la revendication 3, **caractérisée en ce que** l'élément (11) de bridage est constitué par une bielle (110) s'étendant entre un montant (7) et une biellette (5) du parallélogramme (4) et couplée à pivotement au montant (7) et à la biellette (5) entre lesquels elle s'étend, cette bielle (110) étant munie au niveau de l'une de ses zones de couplage d'une lumière (111) oblongue avec les extrémités de la lumière matérialisant des positions extrêmes de déformation du parallélogramme (4).

5. Machine travail du sol selon la revendication 4, **caractérisée en ce que** le montant (7) auquel l'élément (11) de bridage est couplé à pivotement est le montant (7) arrière du parallélogramme, ce montant (7) arrière correspondant au montant du parallélogramme le plus éloigné du châssis (2) par rapport au montant (7) avant.

6. Machine (1) de travail du sol selon l'une des revendications 1 à 5, **caractérisée en ce que** l'actionneur (10) d'entraînement en déplacement à pivotement du parallélogramme (4) autour de l'axe (YY') pivot de sa liaison à pivotement au châssis (2) est un vérin.

## Patentansprüche

1. Bodenbearbeitungsmaschine (1), umfassend einen Rahmen (2) und mindestens eine Werkzeughaltestruktur (3), die mit dem Rahmen (2) gekoppelt werden kann, wobei die Werkzeughaltestruktur (3) ein verformbares Parallelogramm (4) umfasst, an das mindestens ein Werkzeug (12) gekoppelt werden kann, wobei dieses verformbare Parallelogramm (4) eine obere Stange (5), eine untere Stange (6) und zwei Pfosten (7), bezeichnet als vorderer und hinterer Pfosten, umfasst, die mit den Stangen (5, 6) durch eine Schwenkverbindung (8) der Achse (XX'), bezeichnet als horizontal, in der Verwendungskonfiguration der Werkzeugtragstruktur (3) für eine Verformung des Parallelogramms (4) im Sinne eines Absenkens oder eines Anhebens des mindestens einen Werkzeugs (12) verbunden ist, wobei dieses Parallelogramm (4) schwenkend mit dem Rahmen (2) durch eine einzige Verbindung (9), bezeichnet als Schwenkverbindung, gekoppelt ist, die eine Schwenkachse (YY') aufweist, wobei eine Betätigungsvorrichtung (10) zwischen dem Parallelogramm (4) und dem Rahmen (2) angeordnet ist, wobei diese Betätigungsvorrichtung (10) eine Betätigungsvorrichtung zur Schwenkverschiebung der Gesamtheit des Parallelogramms (4) um die Schwenkachse (YY') seiner Schwenkverbindung (9) mit dem Rahmen (2) ist, und wobei das Parallelogramm (4) mit mindestens einem Spannelement (11) der Verformung des Parallelogramms ausgestattet ist, **dadurch gekennzeichnet, dass** die Schwenkachse (YY') der Schwenkverbindung (9) des Parallelogramms (4) mit dem Rahmen (2) mit der Achse (XX') der Schwenkverbindung (8) zwischen der obere Stange (5) und eines der Pfosten (7) des Parallelogramms (4) zusammenfällt.

2. Bodenbearbeitungsmaschine (1) nach Anspruch 1, **dadurch gekennzeichnet, dass** die Betätigungsvorrichtung (10) zur Schwenkverschiebung der Gesamtheit des Parallelogramms (4) zwischen dem Rahmen (2) und dem vorderen Pfosten (7) des Parallelogramms angeordnet ist, wobei dieser vordere Pfosten (7) dem Pfosten des Parallelogramms (4) entspricht, der mit Bezug auf den hinteren Pfosten (7) dem Rahmen am nächsten ist.

3. Bodenbearbeitungsmaschine (1) nach einem der Ansprüche 1 oder 2, **dadurch gekennzeichnet, dass** das Spannelement (11) konfiguriert ist, um die Verformung des Parallelogramms (4) zwischen zwei Verformungsendpositionen zu begrenzen.

4. Bodenbearbeitungsmaschine (1) nach Anspruch 3, **dadurch gekennzeichnet, dass** das Spannelement (11) aus einer Verbindungsstange (110) besteht, die sich zwischen einem Pfosten (7) und einem Stange (5) des Parallelogramms (4) erstreckt und schwenkend mit dem Pfosten (7) und mit der Stange (5) gekoppelt ist, zwischen denen sie sich erstreckt, wobei diese Verbindungsstange (110) auf der Ebene eines ihrer Kopplungsbereiche mit einer länglichen Öffnung (111) ausgestattet ist, wobei die Enden des Öffnung die Endpositionen der Verformung des Parallelogramms (4) markieren.

5. Bodenbearbeitungsmaschine nach Anspruch 4, **dadurch gekennzeichnet, dass** der Pfosten (7), an den das Spannelement (11) schwenkend gekoppelt ist, der hinteren Pfosten (7) des Parallelogramms ist, wobei dieser hintere Pfosten (7) dem Pfosten des Parallelogramms entspricht, der mit Bezug auf den vorderen Pfosten (7) am weitesten vom Rahmen (2) entfernt ist.

6. Bodenbearbeitungsmaschine (1) nach einem der Ansprüche 1 bis 5, **dadurch gekennzeichnet, dass** die Betätigungsvorrichtung (10) zur Schwenkverschiebung des Parallelogramms (4) um die Schwenkachse (YY') seiner Schwenkverbindung mit dem Rahmen (2) ein Zylinder ist.

## Claims

1. A soil working machine (1) comprising a frame (2) and at least one tool-holder structure (3) which can be coupled to the frame (2), said tool-holder structure (3) comprising a deformable parallelogram (4) to which at least one tool (12) can be coupled, this deformable parallelogram (4) comprising an upper connecting rod (5), a lower connecting rod (6) and two uprights (7), called front and rear, connected to the connecting rods (5, 6) by a pivot link (8) of axis (XX'), called horizontal, in the usage configuration of the tool-holder structure (3) for a deformation of the parallelogram (4) in the direction of a lowering or raising of the at least one tool (12), this parallelogram (4) being pivotally coupled to the frame (2) by a single link (9), called pivot link, having a pivot axis (YY'), an actuator (10) being arranged between the parallelogram (4) and the frame (2), this actuator (10) being an actuator for driving the pivoting movement of the entire parallelogram (4) about the pivot axis (YY') of its pivot link (9) to the frame (2) and the parallelogram (4) being provided with at least one element (11) for clamping the deformation of the parallelogram, **characterized in that** the pivot axis (YY') of the pivot link (9) of the parallelogram (4) to the frame (2) is combined with the axis (XX') of the pivot link (8) between the upper connecting rod (5) and one of the uprights (7) of the parallelogram (4).

2. The soil working machine (1) according to claim 1, **characterized in that** the actuator (10) for driving the pivoting movement of the entire parallelogram (4) is arranged between the frame (2) and the front upright (7) of the parallelogram, this front upright (7) corresponding to the upright of the parallelogram (4) closest to the frame (2) with respect to the rear upright (7).

3. The soil working machine (1) according to one of claims 1 or2, **characterized in that** the clamping element (11) is configured to limit the deformation of the parallelogram (4) between two extreme deformation positions.

4. The soil working machine (1) according to claim 3, **characterized in that** the clamping element (11) consists of a connecting rod (110) extending between an upright (7) and a connecting rod (5) of the parallelogram (4) and pivotally coupled to the upright (7) and to the connecting rod (5) between which it extends, this connecting rod (110) being provided at one of its coupling zones with an oblong slot (111) with the ends of the slot embodying extreme deformation positions of the parallelogram (4).

5. The soil working machine according to claim 4, **characterized in that** the upright (7) to which the clamping element (11) is pivotally coupled is the rear upright (7) of the parallelogram, this rear upright (7) corresponding to the upright of the parallelogram furthest from the frame (2) in relation to the front upright (7).

6. The soil working machine (1) according to one of claims 1 to 5, **characterized in that** the actuator (10) for driving the pivoting movement of the parallelogram (4) about the pivot axis (YY') of its pivot link to the frame (2) is a jack.
